# EUROPEAN PATENT SPECIFICATION

(11) **EP 1 410 902 B1**
(45) Date of publication and mention of the grant of the patent: **19.04.2006**
(21) Application number: 03009769.5
(22) Date of filing: 06.05.2003
(51) Int. Cl.: B32B 27/34

(54) **Multi-layer, heat-shrinking film that acts as an oxygen and water vapour barrier and exhibits low curling**
Mehrschichtiger Schrumpffilm mit Sauerstoff- und Wasserdampfbarriere und geringer Rollneigung
Film multi-couche thermo-retractable avec barriere à l'oxygène et à la vapeur d'eau et montrant une faible tendance au gondolage

(30) Priority: 11.10.2002 IT MI20022159
(43) Date of publication of application: 21.04.2004
(73) Proprietor: Tecno Coating Engineering S.r.l., 28015 Momo (NO) (IT)
(72) Inventor: Gini, Claudio, 28047 Oleggio (NO) (IT)
(74) Representative: Savi, Alberto

(56) References cited:
- EP-A- 0 974 452
- US-A- 5 492 741
- PATENT ABSTRACTS OF JAPAN vol. 011, no. 125 (M-582), 18 April 1987 (1987-04-18) & JP 61 268431 A (OKURA IND CO LTD), 27 November 1986 (1986-11-27)

## Description

The present invention relates to a film made up of overlapping layers of thermoplastic polymers of differing types, wherein at least two are made up of a polyamide.

Said film is heat-shrinking, being bi-oriented. Moreover, it is perfectly transparent even after shrinking, is mechanically very strong and has excellent gas barrier properties, especially in relation to oxygen.

The film according to this invention is therefore suitable for packaging and preserving perishable products, both food and non-food.

For years packaging for perishable food products has been the subject of innumerable research and development projects, both in terms of the packaging material and of the techniques applied.

Particularly in the case of fresh meat and meat products, cheese, fish and other perishable food products, efforts have been directed towards creating a packaging material that essentially offers the following performances:
- high oxygen, water vapour, and aroma barrier properties for longer shelf life of the product packaged;
- good mechanical characteristics to protect the contents during transportation and to allow packaging using automatic machines;
- optical transparency and glossiness so as to keep the product appearance unaltered and to obtain attractive packages;
- easy welding for closing the packages and good strength of the same;
- good adhesion between the wrapping and the contents for various reasons including preservation of the product.

The use of polymer films has resolved many of these problems. This was made possible both due to the intrinsic characteristics of individual polymers, as well as the possibility of combining said intrinsic characteristics in order to obtain a film made up of a number of laminated or co-extruded layers, in such a way that the final properties of the multi-layer film provide the sum of the characteristics of the individual layers.

It is therefore also necessary that the various layers of the film adhere to one another properly.

The best known technique relates to the production of multi-layer, heat-shrinking films in which the central layer, which acts as the gas barrier, may be made up of vinyl-vinylidene chloride copolymers (PVDC), while the external layers are generally made up of polyolefin.

This type of structure is very widespread and has been in use for many years.

One reason for positioning the gas barrier in the centre of the layered structure is that said layer is normally made up of a polymer with a high Young's modulus, whereas the polymers making up the other layers are made up of low modulus polymers. If said barrier were to be positioned non-symmetrically in relation to the other layers, due to the greater membrane tension exerted, it would cause wrinkling of the layered structure, known as "curling".

The polymer used to form the barrier layer, besides being a high modulus polymer, normally melts at a higher temperature than the polymers making up the other layers, and the fact that said layer is positioned inside the layered structure creates welding problems.

In fact, when two sheets are placed on top of one another, it occurs that both the layers that are in contact with one another and the layers on the outside melt at low temperatures. Consequently, when heat is applied using bars or hot plates, or when an electrically heated filament is used, in addition to causing the layers that are in contact with one another to melt, the external layers in contact with the hot plates at the welding also melt, which greatly prejudices the integrity of the film as well as fouling the heating plates.

To overcome this difficulty as well as to provide the film with increased mechanical strength, especially in terms of abrasion and puncturing, a technique involving selective crosslinking of the polymers that make up one of more layers is used. Said technique makes said polymers partly unmeltable and, in any event, raises their melting temperature. In this way, by crosslinking of the layers that come into contact with the heating plates during the welding operation, melting is avoided.

The most widespread technique for crosslinking of the polymers is radiation using high energy particles, but other techniques exist, such as chemical crosslinking using peroxides, or by exposure to ultraviolet rays, with suitable addition of the polymers involved in the crosslinking process.

A number of patents are in existence in this regard.

As experts in this field know, crosslinking may take place before biaxial stretching, or on the finished film already oriented.

According to patent US 5,632,843, a multi-layer EVA / PVDC / EVA (EVA = ethylene―vinyl―acetate copolymer) film, crosslinked by means of electronic bombardment after biaxial stretching, offers improved mechanical characteristics and welding strength.

In more recent times, vinyl-vinylidene chloride copolymer has in part been substituted by another polymer with barrier characteristics - an ethylene-vinyl-alcohol copolymer (EVOH).

In heat-shrinking films with this kind of structure the EVOH is normally used for the central layer, with polyolefin being used for the external layers. Adhesion between the various layers can be obtained by using special types of modified polyolefin, also referred to as adhesives.

Mechanical strength and adhesion between the layers can be improved by subjecting the film to radiation using high-energy particles in this case as well.

The US 5,993,922 patent also shows that crosslinking can be carried out in a differentiated way with different levels of crosslinking for the various layers of a multi-layer film subjected to radiation using ionised particles, if special products, in the form of additives facilitating the crosslinking effect, are added to the layers. Obviously, said additives are added to the layers that are to be crosslinked selectively, so as to avoid rendering the welding layer unmeltable.

The US 5,492,741 patent discloses a film for packaging containing a cushioning sheet produced by foaming a termoplastic resin using a foaming agent. Said sushioning sheet is then preferably crosslinked to improve the physical strength or elasticity.

All these crosslinking techniques have the main aim of improving the film's mechanical characteristics, increasing adhesion between the layers, and improving the mechanical strength of the welding.

However, the crosslinking technique that resolves welding problems without introducing "curling" phenomenon, as well as providing the film with high mechanical strength remains a serious problem, since it makes the polymers that make up the film unmeltable, thereby making them impossible to recycle.

An alternative technique to selective crosslinking, used to solve welding problems as well as to increase mechanical strength consists of using high strength polymers with a high melting temperature for the outer layer of the film.

In this way however, the two polymers, the outer and inner polymers, differ from one another in terms of melting temperature, elasticity modulus, and level of cristallinity.

Due to this fact, different tensions develop in the structure of the film that can pull the film in one direction, thereby giving rise to the phenomenon of wrinkling or "curling" already described.

A third problem is that of loss of transparency (haze) and glossiness (gloss) in the film after shrinking during the application phase. This phenomenon, which is largely linked to a lack of adhesion between the layers that shrink differently from one another as well as possible damage to the surface due to the heat applied to cause shrinking, noticeably mars the finished appearance of the packaging.

The problems described for this known technique are resolved by the present invention that proposes a plastic film that meets claim 1, said film being multi-layer, heat-shrinking, having gas barrier characteristics and non-crosslinked.

It has been found that a film conforming to the present invention results in a product characterised by:
- exceptional mechanical strength, obtained by using high strength polymers of a polyamide type;
- easy welding and good welding strength, obtained by the presence in the layered structure and particularly in the external layer, of polymers melting at high temperatures despite not being crosslinked, thereby making it possible to melt the melting layer completely without altering the overall integrity of the film;
- optical characteristics that are superior to those found with normal products on the market, thanks to the intrinsic characteristics of the polymers used and perfect adhesion between the layers, obtained by using special polymers, having an adhesive function, in order to bond contiguous layers better where these are made up of polymers that do not have sufficient chemical-physical compatibility;
- total or almost total absence of curling, despite the asymmetrical structure, obtained by careful selection of the thickness and positioning of the layers with a high Young's modulus in the layered structure, as explained below;
- good shrinkage characteristics obtained by using polymers with a high Young's modulus;
- good adhesion to the contents of the package, obtained by using ionomers in the welding layer, which is also in contact with the package contents;
- good oxygen and water vapour barrier characteristics so as to guarantee the shelf life of many perishable products, even beyond the normal limits set by the relevant standards, due to the simultaneous use of at least two layers that, forming an efficient water vapour barrier, enhance the efficacy of the oxygen barrier by the third layer positioned between said first two layers.

All of these characteristics were obtained without having to submit the film to ionising radiation treatment, which causes crosslinking of the polymers, making it impossible to recycle the film.

In order to obtain high mechanical characteristics, especially in terms of abrasion and puncturing, the invention calls for the use of a polymer with high mechanical strength and high Young's modulus in the external layer, that melts at high temperature. This also enhances weldability. Said polymer also acts as an effective gas barrier.

Since making up said external layer in this way would result in curling, the invention provides for inserting other layers made of polymers with a high Young's modulus at suitable positions in the layered structure, said layers acting to balance the effect of the external layer, thereby greatly reducing curling, to the point of nullifying it in some compositions, as it will be shown below.

As it is known from the theory of lamination, the curling effect occurs on a layered or laminated structure if the sum of the moments exerted by each individual layer in relation to the laminated neutral plane during shrinking is anything other than zero. Layers made up of high modulus polymers generally exert a membrane force that is considerably higher than the layers made up of low modulus polymers. Such a force arises due to the fact that the shrinkage of each individual layer is partially impeded by the action of the other layers in the laminate.

Particularly, the force exerted by an individual layer is known to depend on the Young's modulus of the polymer making up that layer, its thickness, and the extent to which shrinking is impeded. Thus (from the theory of elasticity) the force exerted is equal to the product of the Young's modulus by the thickness of the laminate and by the shrinking impeded, expressed as a percentage.

However, the moment exerted on the laminate depends on the distance of each layer from the neutral plane of the laminate, since the moment is equal to the product of the membrane force by said distance of said layer from said neutral plane.

As a result, a layer made up of a high modulus polymer, positioned about the neutral plane will not cause any imbalance in the laminate, whereas if said high modulus layer is positioned on the surface of the laminate itself, the imbalance that said layer causes will be at its maximum.

Nevertheless where, as in the present invention, one wishes to put a high modulus layer exactly at the surface of the laminate to increase mechanical strength and weldability, the laminate can be rebalanced by inserting at least one other high modulus layer, positioned on the opposite side of the neutral plane.

In practice said layer must be formed so that the product of the membrane force it exerts multiplied by its distance from the neutral plane, that is the moment in relation to the neutral plane, is equal and opposite to that exerted, always in relation to the neutral plane, by the layer whose effect you are seeking to nullify.

However, as a technical expert in this sector well knows, it is not easy to calculate the effects of the individual layers on the overall behaviour of the laminate, as not all the parameters required for the calculation are known with sufficient precision. For example, the thickness of an individual layer is determined approximately, to within a few percentage points. Also the level of shrinkage during stabilisation of the tubular is plagued by uncertainty, since it depends on the process temperature during biaxial stretching, with said temperatures also being known to only within a few percentage points.

In practice nominal values for the various parameters are set as realistically as possible, and said parameters are used to design the laminate, applying the concepts explained above; thus a great amount of experimentation is undertaken in order to reach a formulation, by way of successive approximations, that will minimise the curling effect.

Applying the concepts laid out above, research has reached the point of defining some preferred typical configurations.

According to a first preferred typical configuration, the layered structure according to the invention comprises seven layers A - 8 - C - D - E - F - G, starting from the layer in contact with the product, made up as follows:
- layer A, thickness 20%, welding layer - the inner side of the packaging, it may be made up of zinc or sodium ionomers, or low-density polyethylene, or linear low-density polyethylene (LDPE/LLDPE), or an ethylene or octene plastomer;
- layer B, thickness 10%, first adhesive layer - made up of an adhesive polymer chosen from the EVA family, or ethylene copolymers modified with maleic anhydride, or terionomers, or an EVA - ethylene acid metacrylic copolymer;
- layer C, thickness 15%, first barrier layer (mainly for water vapour) - made up of a polyamidic polymer chosen among PA 6 or PA 6/66 or their blend;
- layer D, thickness 15%, second barrier layer (mainly for oxygen) - made up of a polyamidic polymer type PA 6/66 alone or blended with PA 6 or with aliphatic PA containing meta-xylylene groups, or with an amorphous PA;
- layer E, thickness 15%, third barrier layer (mainly for water vapour) - made up of a polyamidic polymer chosen among PA 6 or PA 6/66 or their blend and it may be equal to or different from layer C;
- layer F, thickness 10%, second adhesive layer - made up of an adhesive polymer chosen from the EVA family or ethylene copolymers modified with maleic anhydride, or terionomers, or an EVA - ethylene acid metacrylic copolymer;
- layer G, thickness 15%, outer layer and fourth barrier layer (mainly for water vapour) - made up of a polyamidic polymer chosen among PA 6 or PA 6/66 or their blend.

The thickness of each layer may vary by 5%, with the exception of the two outer layers, whose thickness may vary by 10%. This variability should not be seen as tolerance but rather as a choice that is possible according to the characteristics that one wishes to obtain. For example, if one wishes to increase the barrier effect, the thickness of layers having this function is increased, whereas in order to better balance the laminated film to reduce the curling phenomenon, the thicknesses of the layers made up of materials with a low Young's modulus are calibrated in order to space the materials with a high Young's modulus suitably from one another.

As can be seen the layer of film that remains on the outside of the package is made up of a high modulus polymer with a high melting temperature, in order to provide high mechanical strength and easy welding, while the inner layer that is in contact with the product is made up of an ionomer that, apart from having a low melting temperature which makes it easy to weld, also has properties that allow it to adhere to the package's contents.

The outer layer also acts as an effective water vapour barrier, thereby allowing layer D, the oxygen barrier layer, to provide maximum efficiency as an oxygen barrier, said layer D being protected from moisture coming from the food by layer C that has the same composition, or a similar composition to that used for layer F.

In this first preferred configuration described, in addition to the outer layer, which is used to confer high mechanical strength and to act as a water vapour barrier, there are another three barrier layers (C, D, E). Particularly, it is an oxygen barrier layer closed between two water vapour barrier layers.

Layer B (adhesive) is positioned between layer A (welding) and layer C (barrier) since, as these layers are made up of polymers with a different nature, they would not adhere well and would therefore give rise to reduced transparency and glossiness in the shrinking phase.

Due to the chemical compatibility no adhesive is introduced between barrier layers C, D, and E.

Conversely, layer F (it also being adhesive) is positioned between two barrier layers, but its function is not to increase adhesion as the two layers have the same chemical nature and are therefore perfectly compatible, but it is used to space them, therefore positioning the two high modulus layers suitably about the neutral plane, in order to minimise the curling effect.

According to a second preferred typical configuration, the layered structure according to the invention comprises seven layers A - B - C - D - E - F - G, starting from the layer in contact with the product, made up as follows:
- layer A, thickness 23%, welding layer- the inner side of the packaging, it may be made up of ionomers containing zinc or sodium, or low-density polyethylene or linear low-density polyethylene (LDPE/LLDPE), or an ethylene or octene plastomer;
- layer B, thickness 8%, first adhesive layer - made up of an adhesive polymer chosen from the EVA family or ethylene copolymers modified with maleic anhydride, or terionomers, or an EVA - ethylene acid metacrylic copolymer;
- layer C, thickness 18%, first barrier layer (mainly for water vapour) - made up of a polyamidic polymer chosen among PA 6 or PA 6/66 or their blend;
- layer D, thickness 8%. second barrier layer (mainly for oxygen) - made up of a polyamidic polymer type PA 6/66 alone or blended with PA 6 or with aliphatic PA containing meta-xylylene groups, or with an amorphous PA;
- layer E, thickness 18%, second adhesive layer - made up of an adhesive polymer chosen from the EVA family or ethylene copolymers modified with maleic anhydride, or terionomers or an EVA ethylene acid metacrylic copolymer;
- layer F, thickness 25%, outer layer and third barrier layer (mainly for water vapour) - made up of a polyamidic polymer chosen among PA 6 or PA 6/66 or their blend.

The thickness of each layer may vary by 5%, with the exception of the two outer layers, whose thickness may vary by 10%. The indications regarding the variations in thickness given above, also apply to said second preferred configuration.

In the second preferred configuration described, there is always the external layer whose function is to provide mechanical strength and to act as a water vapour barrier, whereas there are also only another two barrier layers (C, D) with a combined thickness that is substantially the same as that for the three barrier layers C, D, E in the first preferred configuration described.

Given the chemical compatibility between the two barrier layers C, D no adhesive layer is included between them, whereas an adhesive layer (B) is placed between the welding layer (A) and the first barrier layer (C).

A second adhesive layer (F) is positioned between the third barrier layer (E) and external layer (G), not for compatibility reasons since they have the same chemical nature, but to space them adequately in order to minimise the curling effect.

According to the third preferred typical configuration, the layered structure according to the invention comprises five layers A - B - C - D - E, starting from the layer in contact with the product, made up as follows:
- layer A, thickness 23%, welding layer - the inner side of the packaging, it may be made up of zinc or sodium ionomers, or low-density polyethylene or linear low-density polyethylene (LDPE/LLDPE), or an ethylene or octene plastomer;
- layer B, thickness 8%, first adhesive layer - made up of an adhesive polymer chosen from the EVA family, or ethylene copolymers modified with maleic anhydride, or terionomers, or an EVA - ethylene acid metacrylic copolymer;
- layer C, thickness 26%, first barrier layer (mainly for oxygen) - made up of a polyamidic polymer type PA 6/66 alone or blended with PA 6 or with aliphatic PA containing meta-xylylene groups, or with an amorphous PA;
- layer D, thickness 18%, second adhesive layer - made up of an adhesive polymer chosen from the EVA family or ethylene copolymers modified with maleic anhydride, or terionomers or an EVA ethylene acid metacrylic copolymer;
- layer E, thickness 25%, external layer and second barrier layer (mainly for water vapour) - made up of a polyamidic polymer chosen among PA 6 or PA 6/66 or their blend.

The thickness of each layer may vary by 5%, with the exception of the two outer layers, whose thickness may vary by 10%. The indications regarding the variations in thickness also apply to said third preferred configuration.

This third configuration is derived from the first wherein the contiguous barrier layers C, D, E are replaced by a single layer (C) having a thickness that is equal to the sum of the thicknesses of said three barrier layers.

The chemical composition of said barrier layer is of the same type as layer D in the first configuration, as this is a layer that is particularly effective as an oxygen barrier.

A laminate of this type is therefore particularly suitable for packing of dry products that are to be preserved in not so damp places, as there is no barrier layer that is particularly effective as a water vapour barrier on the product's side of the packaging, as this is only found towards the outside.

The film according to this invention is obtained by processes known as double or triple bubble.

The double bubble process involves extruding a primary tubular comprising said five, six, or seven layers, cooling it down with water as it exits the extrusion head (first bubble) and then re-heating it in specific ovens with elements that heat using infrared radiation. When the tubular reaches the preset temperature, it is inflated using compressed air and stretched simultaneously in two directions - longitudinal (MD) that is in the direction the machine moves, where it is stretched by two drawing rollers that turn at differing speeds, and transverse (TD) due to the expansion of the original tubular due to the effect of the compressed air blown into it (second bubble). In some cases (triple bubble process) the tubular, once it has been flattened by the drawing rollers, is sent to another infrared radiation oven where, being inflated with air at low pressure, it is able to contract due to the heat and possibly to lose part of the shrinkage (third bubble).

Said operation, connected with the third bubble, results in a partial release of the internal tensions accumulated in the various layers of the film, tensions which may not be uniformly distributed in the various layers of the film, producing post recrystallisation.

The ratio between stretching and inflation in the first bubble are basically between 1:3 and 1:5 in the machine direction (MD), and between 1:3 and 1:4.5 in the transverse direction (TD) respectively.

This fact means that from a primary thickness of the tubular of between 300 and 1300 µm one obtains bi-oriented films with thicknesses of between 20 and 60 µm, depending on the percentage stretching applied.

The film thus obtained, if heated to a temperature near that used for orientation, tends to return to its original dimensions, i.e. giving rise to a phenomenon of retraction.

Tests carried out on packages formed using layered film according to the invention have shown that the film adheres perfectly to all types of contents, whether these be meat products such as bacon that has a very greasy surface, or very irregular surfaces that are hard and bumpy such as seasoned parmesan cheese with a rind.

In the case of bacon, after shrinking the film adheres well to the product well without any micro cavities forming that contain air, which may start an oxidation process on the product, especially where it has a high animal fat content.

In the case of seasoned parmesan with a rind both the percentage shrinkage and the shrinking force exerted by the film during packaging are such that they allow the film to wrap the product carefully and precisely, independently of the irregularity of the shape involved, without leaving any cavities and therefore providing a very close skin-type contact with the contents.

In practice such adhesion of the film with the contents has also been found to remain intact even for a period of about twelve months, period which usually is much longer than normal shelf life guarantees offered by the suppliers of this type of food product. The above phenomena of adhesion to the packaged product depend both on the surface tension in the intemal layer A of the film in relation to the nature of the surface of the contents, and on the force with which the film shrinks.

The first of these phenomena occurs on a micro scale and involves the state of the two surfaces (film / product) in order to provide good adhesion, even in the presence of negative factors such as animal fat that can prevent good adhesion.

The second phenomenon occurs on a macro scale and involves the force with which the film shrinks, thereby adhering to the contents (shrinkage force). This is directly linked to the characteristics of the polymers used in the structure.

In bi-oriented, heat-shrinking films the parameter directly linked to the shrinkage force is given by the yield force: the higher the yield force for the polymer at ambient temperature, the higher the shrinkage force developed by the oriented film in the application phase.

Therefore where there is a high elastic modulus, the adhesion of the film to the contents does not tend to diminish over time.

In the case of the structure according to this invention the polyamides used have yield forces of more than 25 MPa and elastic moduli of more than 350 MPa.

These are both high values both in absolute terms, and when compared with those for alternative barrier polymers (EVOH, PVDC) used for similar bi-oriented films. In the case of these latter polymers in fact that yield force and elastic modulus for more rigid and tougher polymers is around 18 - 20 MPa for the yield force and 200 - 300 MPa for the elastic modulus.

Even perishable products such as fresh meat products, fresh and seasoned cheese, and fish are found to be adequately protected in terms of both oxidation and the transmission of water vapour.

The film produced according to the procedure described above therefore consists of a heat-shrinking, weldable, coextruded layered structure, with good optical and mechanical characteristics, with oxygen and water vapour barrier properties, high shrinkage force, and good adhesion to the product packaged. In addition good adhesion is found between the various layers.

These properties, the list of which is not to be considered as exhaustive, result in a very particular film for packaging perishable goods (food and non-food), providing the following characteristics:
- protection from the surrounding environment,
- low transmission of oxygen and water vapour,
- high mechanical strength,
- good welding properties,
- good presentation of the packaged products,
- possibility of recycling.

A great amount of experimentation has been carried out, which has led to the definition of some specific configurations for laminates that, compared with a high quality product on the market, showed very interesting results.

The polymers used for this experimentation are normally found on the market. The commercial names are given in Table 1, enclosed.

The specific configurations of these laminates are shown in Table 2 (tab. 2a, tab. 2b and tab. 2c respectively for the first, second, and third preferred configuration), while table 3 shows a comparison with a commercial product referred to as BB.

As you can see in tab. 3, said reference film does not show the curling effect since its structure is substantially symmetrical. In fact, LLDPE (linear low-density polyethylene) has an elastic modulus that is significantly lower than that for the polyamides used in the examples cited, which is comparable to that for an ionomer. On the other hand, such film also has a welding strength that is below that for the compositions as per the examples cited.

**Table 1**

| **POLYMER** | **MANUFACTURER** | **NAMES** |
|---|---|---|
| PA6 | BASF | B 35 F, B 4 |
| PA 6 | UBE | 1022 C2 |
| PA 6/66 | BASF | C 35 F |
| PA 6/66 | UBE | FDX 17, FDX 27 |
| PA amorphous | Dupont | Selar PA 3426 |
| PA aliphatic | Mitsubishi | MXD 6 |
| lonomers | Dupont | Surlyn 1705,1650,1601 |
| Therionomers | Dupont | Surlyn 1857, 1801, 1901 |
| EVA | Dupont | Elvax 3135 X |
| EVA | Exxon | UL 00909 |
| Ethylene metacrilic copolymer acid | Dupont | Nucrel 1202 HC |
| Ethylene acrilic acid copolymer | DOW | Primacor 1410, 1321, 1420 |
| Plastomers ethylene - octene | DOW | Affinitt PL series |
| Plastomers ethylene - octene | Exxon | EXAT series |
| LLDPE modified with maleic anhydride | Dupont | Bynel series 4000, series 4100, series 4200 |
| LLDPE | DSM | Stamylex 08-026 F, 1026 F, 1046 F, 09-046 F |
| LLDPE | DOW | Dowlex 2047, 2045, 2602 T |
| LDPE | DOW | 562 R |
| LDPE | DSM | Stamylan 2102 T, 2402 T, 2602 T |

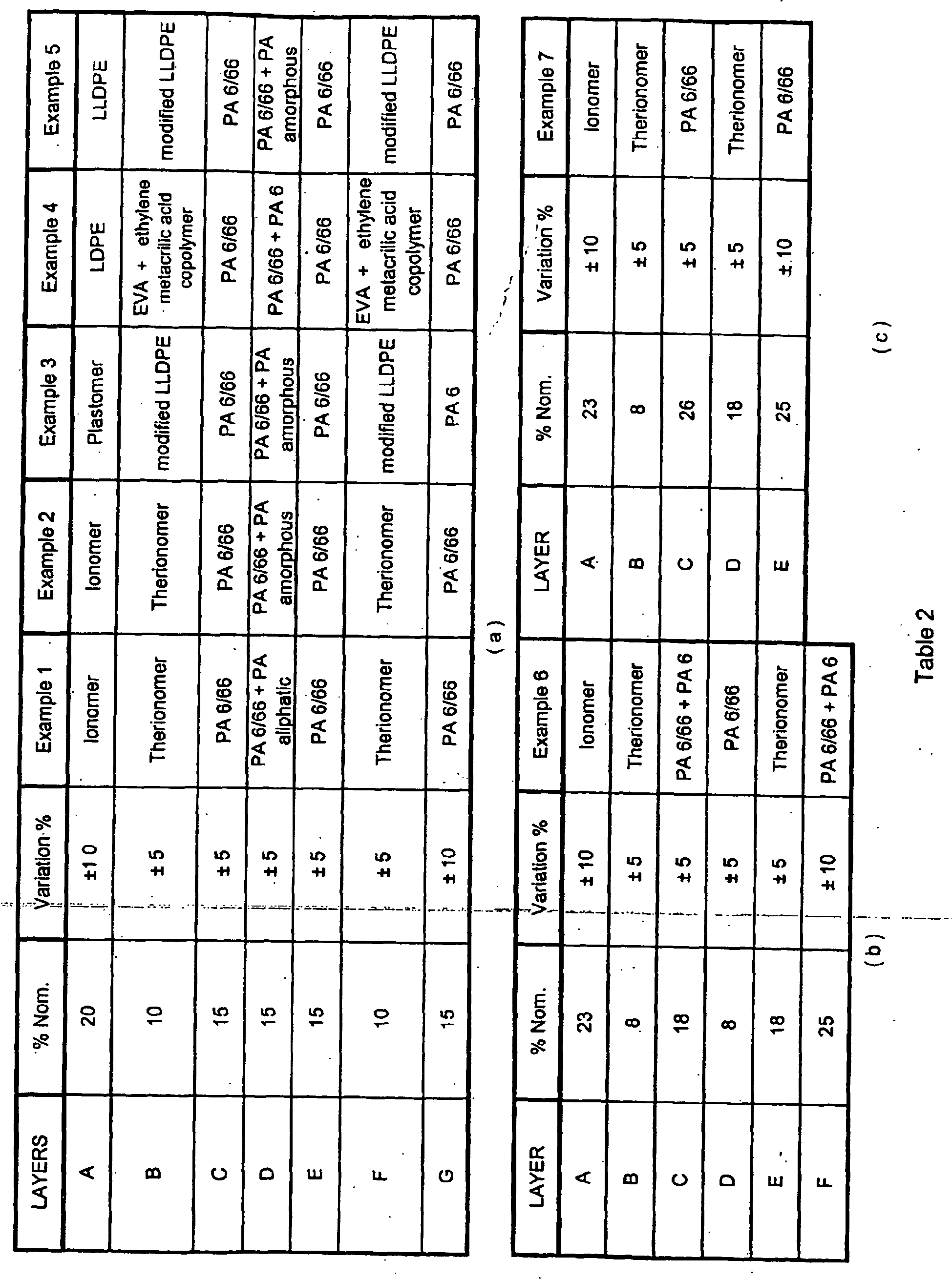

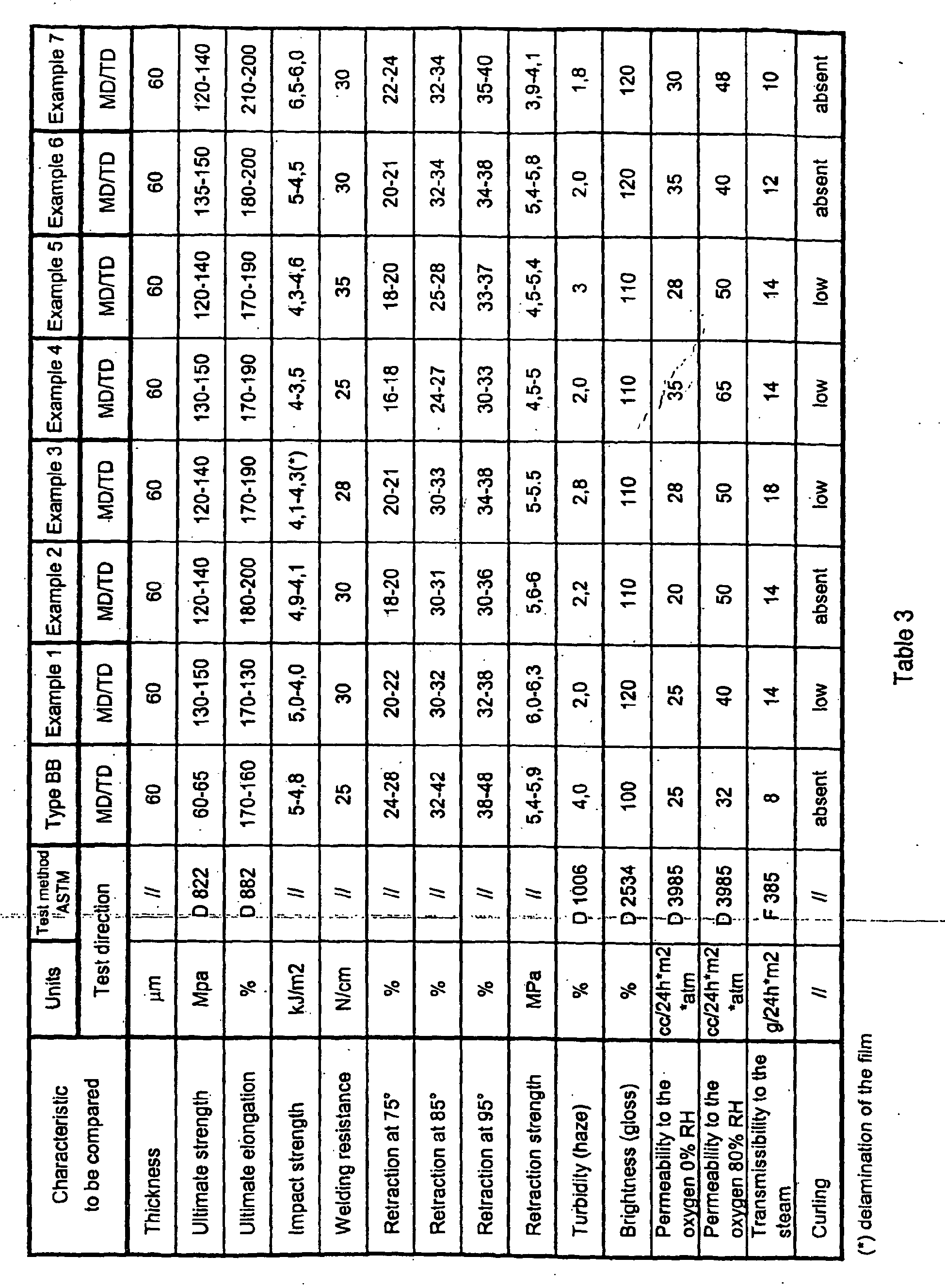

## Claims

1. Heat-shrinking, transparent film for packaging food products comprising a number of overlapping layers made up of thermoplastic polymers of different types, non-crosslinked, wherein the material that makes up one of the two outer layers melts at a temperature that is lower than that for the materials that make up the other layers, said film being obtainable by a double or triple bubble process and being **characterised by** the fact that:
- at least two layers are made up of polymers having a Young's moduius that is substantially higher than that for the polymers that make up the other layers,
- one of said at least two layers with a higher Young's modulus is spaced from the other layers with a higher Young's modulus by at least one layer with a lower Young's modulus,
- one of said at least two layers with a higher Young's modulus is on the outside of the film, that is one of two faces of the film, white the other at least one layer with a higher Young's modulus Is inside the film.

2. Film according to claim 1, **characterised by** the fact that said at least two layers with a higher Young's modulus are highly impermeable to gas, especially oxygen and water vapour.

3. Film according to claim 1, **characterised by** the fact that the said polymers with high Young's modulus only act as a gas barrier.

4. Film according to claim 1, **characterised by** the fact that said at least one layer with a higher Young's modulus inside the film is situated on the opposite side, in relation to the film's neutral plane, of the layer with a higher Young's modulus that is on the outside of the film.

5. Film according to claim 3, having a thickness of between 20 to 60 µm **characterised by** the fact that the thickness of all the layers making up the film, their sequence and thickness, on the basis of which the distance of each layer from the neutral plane of this film derives, are determined in such a way that the sum of the moments exerted by these layers In relation to the neutral plane following the process of blorientation is substantially zero, wherein:
• the moment exerted by a single layer in relation to the neutral plane is equal to the product of the membrane force exerted by that layer multiplied by the distance of the median plane of said layer from the film's neutral plane,
• the membrane force exerted by said layer is equal to the product of the Young's modulus for the material making up the layer mutinied by the thickness of said layer, and by the shrinkage impeded expressed as a percentage.

6. Film according to claims 1 to 3, **characterised by** the fact that the layers with a higher Young's modulus are made up of polymers belonging to the polyamide family.

7. Film according to claims 1 to 4, **characterised by** the fact that the layers with a higher Young's modulus are made up of polymers belonging to the polyamide family and said polymers only act as gas barrier.

8. Film according to claims 1 to 4, **characterised by** the fact that the layers with a higher Young's modulus are made up of polymers belonging to the polyamide family, said polymers only act as gas barrier and said polyamides having a yield force of more than 25 MPa and elastic modulus of more 300 MPa.

9. Film according to claims 1 to 8, **characterised by** the fact that it comprises seven layers A - B - C - D - E - F - G, starting from the layer in contact with the product, made up as follows:
• layer A, thickness 10 to 30%, welding layer - the inner side of the packaging, it may be made up of zinc or sodium ionomers, or low-density polyethylene or linear low-density polyethylene (LDPE/LLDPE), or an ethylene or octene plastomer;
• layer B, thickness from 5 to 15%, first adhesive layer - made up of an adhesive polymer chosen from the EVA family or ethylene copolymers modified with maleic anhydride, or terionomers, or an EVA - ethylene acid metacrylic copolymer;
• layer C, thickness from 10 to 20%, first barrier layer (mainly for water vapour) - made up of a polyamidic polymer chosen among PA 6 or PA 6/66 or their blend;
• layer D, thickness from 10 to 20%, second barrier layer (mainly for oxygen) - made up of a PA 6/66 type polyamidic polymer alone or blended with PA 6 or with aliphatic PA containing meta-xylylene groups, or with an amorphous PA;
• layer E, thickness from 10 to 20%, third barrier layer (mainly for water vapour) - made up of a polyamidic polymer chosen among PA 6 or PA 6/66 or their blend and it may be equal to or different from layer C;
• layer F, thickness from 5 to 15%, second adhesive layer - made up of an adhesive polymer chosen from the EVA family, or ethylene polymers modified with maleic anhydride, or terionomers, or an EVA - ethylene acid metacrylic copolymer;
• layer G, thickness from 5 to 25%, external layer and fourth barrier layer (mainly for water vapour) - made up of a polyamidic polymer chosen among PA 6 or PA 6/66 or their blend.

10. Film according to claim 9, **characterised by** the fact that it comprises seven layers A - B - C - D - E - F - G, starting from the layer in contact with the product, made up as follows:
• layer A, thickness 20%, welding layer - the inner side of the packaging, it may be made up of zinc or sodium ionomers, or low-density polyethylene or linear low-density polyethylene (LDPE/LLDPE),or an ethylene or octene plastomer;
• layer B, thickness 10%, first adhesive layer - made up of an adhesive polymer chosen from the EVA family or ethylene polymers modified with maleic anhydride, or terionomers, or an EVA - ethylene acid metacrylic copolymer;
• layer C, thickness 15%, first barrier layer (mainly for water vapour) - made up of a polyamidic polymer chosen among PA 6 or PA 6/66 or their blend;
• layer D, thickness 15%, second barrier layer (mainly for oxygen) - made up of a polyamidic polymer type PA 6/66 alone or blended with PA 6 or with aliphatic PA containing meta-xylylene groups, or with an amorphous PA;
• layer E, thickness 15%, third barrier layer (mainly for water vapour) - made up of a polyamidic polymer chosen among PA 6 or PA 6/66 or their blend and it may be equal to or different from layer C;
• layer F, thickness 10%, second adhesive layer - made up of an adhesive polymer chosen from the EVA family or ethylene copolymers modified with maleic anhydride, or terionomers, or an EVA - ethylene acid metacrylic copolymer;
• layer G, thickness 15%, external layer and fourth barrier layer (mainly for water vapour) - made up of a polyamidic polymer chosen among PA 6 or PA 6/66 or their blend.

11. Film according to claims 1 to 5, **characterised by** the fact that it comprises six layers A - B - C - D - E - F, starting from the layer in contact with the product, made up as follows:
• layer A, thickness from 13 to 33%, welding layer - the inner side of the packaging, it may be made up of zinc or sodium ionomers, or low-density polyethylene or linear low-density polyethylene (LDPE/LLDPE), or an ethylene or octene plastomer;
• layer B, thickness from 3 to 13%, first adhesive layer - made up of an adhesive polymer chosen from the EVA family, or ethylene copolymers modified with maleic anhydride, or terionomers, or an EVA - ethylene acid metacrylic copolymer;
• layer C, thickness from 13 to 23%, first barrier layer (mainly for water vapour) - made up of a polyamidic polymer chosen among PA 6 or PA 6/66 or their blend;
• layer D, thickness from 3 to 13%, second barrier layer (mainly for oxygen) - made up of a PA 6/66 type polyamidic polymer alone or blended with PA 6 or with aliphatic PA containing meta-xylylene groups, or with an amorphous PA;
• layer E, thickness from 13 to 23%, second adhesive layer - made up of an adhesive polymer chosen from the EVA family or ethylene copolymers modified with maleic anhydride, or terionomers, or an EVA - ethylene acid metacrylic copolymer;
• layer F, thickness from 15 to 35%, external layer and third barrier layer (mainly for water vapour) - made up of a polyamidic polymer chosen among PA 6 or PA 6/66 or their blend.

12. Film according to claim 11, **characterised by** the fact that it comprises six layers A - B - C - D - E - F, starting from the layer in contact with the product, made up as follows:
• layer A, thickness 23%, welding layer - the inner side of the packaging, it may be made up of zinc or sodium ionomers, or low-density polyethylene or linear low-density polyethylene (LDPE/LLDPE), an ethylene or octene plastomer;
• layer B, thickness 8%, first adhesive layer - made up of an adhesive polymer chosen from the EVA family or ethylene copolymers modified with maleic anhydride, or terionomers, or an EVA - ethylene acid metacrylic copolymer;
• layer C, thickness 18%, first barrier layer (mainly for water vapour) - made up of a polyamidic polymer chosen among PA 6 or PA 6/66 or their blend;
• layer D, thickness 8%, second barrier layer (mainly for oxygen) - made up of a polyamidic polymer type PA 6/66 alone or blended with PA 6 or with aliphatic PA containing meta-xylylene groups, or with an amorphous PA;
• layer E, thickness 18%, second adhesive layer - made up of an adhesive polymer chosen from the EVA family or ethylene copolymers modified with maleic anhydride, or terionomers, or an EVA - ethylene acid metacrylic copolymer;
• layer F, thickness 25%, outside layer and third barrier layer (mainly for water vapour) - made up of a polyamidic polymer chosen among PA 6 or PA 6/66 or their blend.

13. Film according to claims 1 to 5, **characterised by** the fact that it comprises five layers A - B - C - D - E, starting from the layer in contact with the product, made up as follows:
• layer A, thickness from 13 to 33%, welding layer - the inner side of the packaging, it may be made up of zinc or sodium ionomers, or low-density polyethylene or linear low-density polyethylene (LDPE/LLDPE), or an ethylene or octene plastomer;
• layer B, thickness from 3 to 13%, first adhesive layer - made up of an adhesive polymer chosen from the EVA family or ethylene copolymers modified with maleic anhydride, or terionomers, or an EVA - ethylene acid metacrylic copolymer;
• layer C, thickness from 21 to 31%, first barrier layer (mainly for oxygen) - made up of a PA 6/66 type polyamidic polymer alone or blended with PA 6 or with aliphatic PA containing meta-xylylene groups, or with an amorphous PA;
• layer D, thickness from 13 to 23%, second adhesive layer - made up of an adhesive polymer chosen from the EVA family, or ethylene copolymers modified with maleic anhydride, or terionomers, or an EVA - ethylene acid metacrylic copolymer;
• layer E, thickness from 15 to 35%, external layer and second barrier layer (mainly for water vapour) - made up of a polyamidic polymer chosen among PA 6 or PA 6/66 or their blend.

14. Film according to claim 13, **characterised by** the fact that it comprises five layers A - B - C - D - E, starting from the layer in contact with the product, made up as follows:
• layer A, thickness 23%, welding layer - the inner side of the packaging, it may be made up of zinc or sodium ionomers, or low-density polyethylene or linear low-density polyethylene (LDPE/LLDPE), or an ethylene or octene plastomer;
• layer B, thickness 8%, first adhesive layer - made up of an adhesive polymer chosen from the EVA family, or ethylene copolymers modified with maleic anhydride, or terionomers, or an EVA - ethylene acid metacrylic copolymer;
• layer C, thickness 26%, first barrier layer (mainly for oxygen) - made up of a PA 6/66 type polyamidic polymer alone or blended with PA 6 or with aliphatic PA containing meta-xylylene groups, or with an amorphous PA;
• layer D, thickness 18%, second adhesive layer - made up of an adhesive polymer chosen from the EVA family, or ethylene copolymers modified with maleic anhydride, or terionomers, or an EVA - ethylene acid metacrylic copolymer;
• layer E, thickness 25%, external layer and second barrier layer (mainly for water vapour) - made up of a polyamidic polymer chosen among PA 6 or PA 6/66 or their blend.

15. Film according to claim 9, **characterised by** the fact that it comprises seven layers A - B - C - D - E - F - G, starting from the layer in contact with the product, made up as follows:
• layer A, thickness 20%, welding layer - the inner side of the packaging - made up of a low melting ionomer-type polymer,
• layer B, thickness 10%, first adhesive layer - made up of a terionomer type adhesive polymer,
• layer C, thickness 15%, first barrier layer (mainly for water vapour) - made up of a PA 6/66 polyamidic polymer,
• layer D, thickness 15%, second barrier layer (mainly for oxygen) - made up of a blend of PA 6/66 - amorphous PA polyamidic polymers;
• layer E, thickness 15%, third barrier layer - made up of a PA 6/66 polyamidic polymer,
• layer F, thickness 10%, second adhesive layer - made up of a terionomer type adhesive polymer,
• layer G, thickness 15%, outer layer and fourth barrier layer (mainly for water vapour) - made up of a PA 6/66 polyamidic polymer.

16. Film according to claim 9, **characterised by** the fact that it comprises seven layers A - B - C - D - E - F - G, starting from the layer in contact with the product, made up as follows:
• layer A, thickness 20%, welding layer - the inner side of the packaging - made up of a low melting ionomer-type polymer,
• layer B, thickness 10%, first adhesive layer - made up of a terionomer type adhesive polymer,
• layer C, thickness 15%, first barrier layer (mainly for water vapour) - made up of a PA 6/66 polyamidic polymer,
• layer D, thickness 15%, second barrier layer (mainly for oxygen) - made up of a blend of PA 6/66 - amorphous PA polyamidic polymers;
• layer E, thickness 15%, third barrier layer - made up of a PA 6/66 polyamidic polymer,
• layer F, thickness 10%, second adhesive layer - made up of a terionomer type adhesive polymer,
• layer G, thickness 15%, outer layer and fourth barrier layer (mainly for water vapour) - made up of a PA 6/66 polyamidic polymer.

17. Film according to claim 9, **characterised by** the fact that it comprises seven layers A - B - C - D - E - F - G, starting from the layer in contact with the product, made up as follows:
• layer A, thickness 20%, welding layer - the inner side of the packaging - made up of a low melting plastomer,
• layer B, thickness 10%, first adhesive layer - made up of a LLDPE type adhesive polymer, modified with maleic anhydride,
• layer C, thickness 15%, first barrier layer (mainly for water vapour) - made up of a PA 6/66 polyamidic polymer,
• layer D, thickness 15%, second barrier layer (mainly for oxygen) - made up of a blend of PA 6/66 - amorphous PA polyamidic polymers,
• layer E, thickness 15%, third barrier layer - made up of a PA 6/66 polyamidic polymer,
• layer F, thickness 10%, second adhesive layer - made up of an LLDPE type adhesive polymer modified with maleic anhydride,
• layer G, thickness 15%, outer layer and fourth barrier layer (mainly for water vapour) - made up of a PA 6 polyamidic polymer.

18. Film according to claim 9, **characterised by** the fact that it comprises seven layers A - B - C - D - E - F - G, starting from the layer in contact with the product, made up as follows:
• layer A, thickness 20%, welding layer - the inner side of the packaging - made up of LDPE,
• layer B, thickness 10%, first adhesive layer - made up of an EVA ethylene acid metacrylic type adhesive polymer,
• layer C, thickness 15%, first barrier layer (mainly for water vapour) - made up of a PA 6/66 polyamidic polymer,
• layer D, thickness 15%, second barrier layer (mainly for oxygen) - made up of a blend of PA 6/66 - amorphous PA polyamidic polymers,
• layer E, thickness 15%, third barrier layer - made up of a PA 6/66 polyamidic polymer,
• layer F, thickness 10%, second adhesive layer - made up of an EVA - ethylene acid metacrylic type copolymer,
• layer G, thickness 15%, outer layer and fourth barrier layer (mainly for water vapour) - made up of a PA 6/66 polyamidic polymer.

19. Film according to claim 9, **characterised by** the fact that it comprises seven layers A - B - C - D - E - F - G, starting from the layer in contact with the product, made up as follows:
• layer A, thickness 20%, welding layer - the inner side of the packaging - made up of an LLDPE;
• layer B, thickness 15%, first adhesive layer - made up of an LLDPE type adhesive polymer, modified with maleic anhydride,
• layer C, thickness 15%, first barrier layer (mainly for water vapour) - made up of a PA 6/66 polyamidic polymer,
• layer D, thickness 15%, second barrier layer (mainly for oxygen) - made up of a blend of PA 6/66 - amorphous PA polyamidic polymers;
• layer E, thickness 15%, third barrier layer - made up of a PA 6/66 polyamidic polymer,
• layer F, thickness 10%, second adhesive layer - made up of an LLDPE type adhesive polymer, modified with maleic anhydride,
• layer G, thickness 20%, outer layer and fourth barrier layer (mainly for water vapour) - made up of a PA 6/66 polyamidic polymer.

20. Film according to claim 11, **characterised by** the fact that it comprises six layers A - B - C - D - E - F, starting from the layer in contact with the product, made up as follows:
• layer A, thickness 23%, welding layer - the inner side of the packaging - made up of a low melting ionomer-type polymer,
• layer B, thickness 8%, first adhesive layer - made up of a terionomer type adhesive polymer,
• layer C, thickness 18%, first barrier layer (mainly for water vapour) - made up of a blend of PA 6/66 - PA6 polyamidic polymers,
• layer D, thickness 8%, second barrier layer (mainly for oxygen) - made up of a PA 6/66 type polyamidic polymer,
• layer E, thickness 20%, second adhesive layer - made up of a terionomer type adhesive polymer,
• layer F, thickness 20%, outer layer and third barrier layer (mainly for water vapour) - made up of a blend of PA6/66 - PA6 polyamidic polymers.

21. Film according to claim 13, **characterised by** the fact that it comprises five layers A - B - C - D - E, starting from the layer in contact with the product, made up as follows:
• layer A, thickness 23%, welding layer - the inner side of the packaging - made up of a low melting ionomer-type polymer,
• layer B, thickness 8%, first adhesive layer - made up of a terionomer type adhesive polymer,
• layer C, thickness 26%, first barrier layer (mainly for water vapour) - made up of a PA 6/66 polyamidic polymer,
• layer D, thickness 18%, second adhesive layer - made up of a terionomer type adhesive polymer,
• layer E, thickness 25%, second barrier layer - made up of a PA 6/66 polyamidic polymer.

22. A double or triple bubble process for the production of the film according to claims 1 to 21.

## Revendications

1. Film transparent thermo rétractable servant à emballer les produits alimentaires composé de plusieurs couches superposées constituées de polymères thermoplastiques de différents types, non réticulés, où le matériau qui constitue une des deux couches externes fond à une température inférieure à celle à laquelle fondent les matériaux qui constituent les autres couches, ledit film étant obtenu moyennant un procédé à double ou triple bulle et **se caractérisant par le fait que** :
• deux couches au moins sont constituées de polymères ayant un module de Young supérieur à celui des polymères qui constituent les autres couches,
• une desdites deux couches ayant un modèle de Young supérieur est séparée des autres couches ayant un module de Young supérieur par au moins une couche ayant un module de Young inférieur,
• une desdites deux couches ayant un module de Young supérieur se trouve sur l'extérieur du film, à savoir qu'elle constitue une des deux faces du film, alors que l'autre couche ayant un module de Young supérieur se trouve à l'intérieur du film.

2. Film selon la revendication 1, **caractérisé par le fait que** lesdites deux couches au moins ayant un module de Young supérieur sont hautement imperméables aux gaz, et en particulier à l'oxygène et à la vapeur d'eau.

3. Film selon la revendication 1, **caractérisé par le fait que** lesdits polymères ayant un module de Young élevé font uniquement office de barrière aux gaz.

4. Film selon la revendication 1, **caractérisé par le fait que** ladite couche au moins ayant un module de Young supérieur à l'intérieur du film est située sur la face opposée, par rapport au plan neutre du film, de la couche ayant un module de Young supérieur située sur la face externe du film.

5. Film selon la revendication 3, d'une épaisseur comprise entre 20 et 60 *µ*m, **caractérisé par le fait que** l'épaisseur de toutes les couches qui constituent le film, leur succession et leur épaisseur, d'où dérive la distance de chaque couche par rapport au plan neutre dudit film, sont déterminées de façon que la somme des moments déterminés par ces couches par rapport au plan neutre après le processus de biorientation est pratiquement nulle, dès lors que :
• Le moment exercé par une couche par rapport au plan neutre est égal au produit de la force de membrane exercée par ladite couche multipliée par la distance du plan médian de ladite couche par rapport au plan neutre du film;
• la force de membrane exercée par ladite couche est égale au produit du module de Young pour le matériau qui constitue la couche, multiplié par l'épaisseur de ladite couche, et par la contraction empêchée exprimée en pourcentage.

6. Film selon les revendications allant de1 à 3, **caractérisé par le fait que** les couches ayant un module de Young supérieur sont constituées de polymères appartenant à la famille des polyamides.

7. Film selon les revendications allant de 1 à 4, **caractérisé par le fait que** les couches ayant un module de Young supérieur sont constituées de polymères appartenant à la famille des polyamides et que lesdits polyamides font uniquement office de barrière contre les gaz.

8. Film selon les revendications allant de 1 à 4, **caractérisé par le fait que** les couches ayant un module de Young supérieur sont constituées de polymères appartenant à la famille des polyamides, lesdits polymères font uniquement office de barrière aux gaz et lesdits polyamides présentent une force de déformation plastique supérieure à 25 MPa et un module élastique supérieur à 300 MPa.

9. Film selon les revendications allant de 1 à 8, **caractérisé par le fait qu'**il comprend sept couches A - B - C - D - E - F - G, à partir de la couche en contact avec le produit, constituées comme suit :
• couche A, épaisseur comprise entre 10 et 30%, couche soudante - face interne de l'emballage - peut être constituée de ionomères de zinc ou de sodium, ou de polyéthylène à basse densité ou de polyéthylène à basse densité linéaire (LDPE/LLDPE) ou d'un plastomère d'éthylène ou d'obtène ;
• couche B, épaisseur comprise entre 5 et 15%, première couche adhésive - constituée d'un polymère adhésif choisi dans la famille EVA ou de copolymères d'éthylène modifiés avec de l'anhydride maléique, ou des téryonomères, ou encore d'un copolymère méthacrylique EVA - acide éthylénique ;
• couche C, épaisseur comprise entre 10 et 20%, première couche barrière (surtout contre la vapeur d'eau) - constituée d'un polymère polyamide choisi entre PA 6 ou PA 6/66 ou leur mélange ;
• couche D, épaisseur comprise entre 10 et 20%, deuxième couche barrière (surtout contre l'oxygène) - constituée d'un polymère polyamide de type PA 6/66 seul ou mélangé à PA 6 ou à PA aliphatique contenant des groupes métaxylène, ou à un PA amorphe ;
• couche E, épaisseur comprise entre 10 et 20%, troisième couche barrière (surtout contre la vapeur d'eau) - constituée d'un polymère polyamide choisi entre PA 6 ou PA 6/66 ou leur mélange, pouvant être identique ou différente de la couche C ;
• couche F, épaisseur comprise entre 5 et 15%, deuxième couche adhésive - constituée d'un polymère adhésif choisi dans la famille EVA, ou de polymères éthyléniques modifiés avec de l'anhydride maléique, ou des téryonomères, ou d'un copolymère méthacrylique EVA - acide éthylénique ;
• couche G, épaisseur comprise entre 5 et 25%, couche externe et quatrième couche barrière (surtout contre la vapeur d'eau) - constituée d'un polymère polyamide choisi entre PA 6 ou PA 6/66 ou leur mélange.

10. Film selon la revendication 9, **caractérisé par le fait qu'**il comprend sept couches A - B - C - D - E - F - G, en partant de la couche en contact avec le produit, constituées comme suit :
• couche A, épaisseur 20%, couche soudante - face interne de l'emballage - peut être constituée de ionomères de zinc ou de sodium, ou de polyéthylène à basse densité ou de polyéthylène à basse densité linéaire (LDPE/LLDPE) ou d'un plastomère d'éthylène ou d'obtène ;
• couche B, épaisseur 10%, première couche adhésive - constituée d'un polymère adhésif choisi dans la famille EVA ou de copolymères d'éthylène modifiés avec l'anhydride maléique, ou des téryonomères, ou d'un copolymère méthacrylique EVA - acide éthylénique ;
• couche C, épaisseur 15%, première couche barrière (surtout contre lavapeur d'eau) - constituée d'un polymère polyamide choisi entre PA 6 et PA 6/66 ou leur mélange ;
• couche D, épaisseur 15%, deuxième couche barrière (surtout contre l'oxygène) - constituée d'un polymère polyamide de type PA 6/66 seul ou mélangé à PA 6 ou à PA aliphatique contenant des groupes métaxylène, ou à un PA amorphe;
• couche E, épaisseur 15%, troisième couche barrière (surtout contre la vapeur d'eau) - constituée d'un polymère polyamide choisi entre PA 6 ou PA 6/66 ou leur mélange, pouvant également être identique ou différente de la couche C ;
• couche F, épaisseur 10%, deuxième couche adhésive - constituée d'un polymère adhésif choisi dans la famille EVA, ou de polymères éthyléniques modifiés avec de l'anhydride maléique, ou des téryonomères, ou d'un copolymère méthacrylique EVA - acide éthylénique ;
• couche G, épaisseur 15%, couche externe et quatrième couche barrière (surtout contre la vapeur d'eau) - constituée d'un polymère polyamide choisi entre PA 6 ou PA 6/66 ou leur mélange.

11. Film selon les revendications allant de 1 à 5, **caractérisé par le fait qu'**il comprend six couches A - B - C - D - E - F, en partant de la couche en contact avec le produit, constituées comme suit :
• couche A, épaisseur comprise entre 13 et 33%, couche soudante - la face interne de l'emballage - peut être constituée de ionomères de zinc ou de sodium, ou de polyéthylène à basse densité ou de polyéthylène à basse densité linéaire (LDPE/LLDPE) ou d'un plastomère d'éthylène ou d'obténe ;
• couche B, épaisseur comprise entre 3 et 13%, première couche adhésive - constituée d'un polymère adhésif choisi dans la famille EVA ou de copolymères d'éthylène modifiés avec de l'anhydride maléique, ou des téryonomères, ou d'un copolymère méthacrylique EVA - acide éthylénique;
• couche C, épaisseur comprise entre 13 et 23%, première couche barrière (surtout contre la vapeur d'eau) ― constituée d'un polymère polyamide choisi entre PA 6 ou PA 6/66 ou leur mélange ;
• couche D, épaisseur comprise entre 3 et 13%, deuxième couche barrière (surtout contre l'oxygène) - constituée d'un polymère polyamide de type PA 6/66 seul ou mélangé à PA 6 ou à PA aliphatique contenant des groupes métaxylène, ou à un PA amorphe;
• couche E, épaisseur comprise entre 13 et 23%, deuxième couche adhésive - constituée d'un polymère adhésif choisi dans la famille EVA, ou de polymères éthyléniques modifiés avec de l'anhydride maléique ou des téryonomères, ou d'un copolymère méthacrylique EVA - acide éthylénique;
• couche F, épaisseur comprise entre 15 et 35%, couche externe et quatrième couche barrière (surtout contre la vapeur d'eau) - constituée d'un polymère polyamide choisi entre PA 6 ou PA 6/66 ou leur mélange;

12. Film selon la revendication 11, **caractérisé par le fait qu'**il comprend six couches A - B - C - D - E - F, en partant de la couche en contact avec le produit, constituées comme suit :
• couche A, épaisseur 23%, couche soudante - la face interne de l'emballage, peut être constituée de ionomères de zinc ou de sodium, ou de polyéthylène à basse densité ou de polyéthylène à basse densité linéaire (LDPE/LLDPE), ou d'un plastomère d'éthylène ou d'obtène;
• couche B, épaisseur 8%, première couche adhésive - constituée d'un polymère adhésif choisi dans la famille EVA ou de copolymères d'éthylène modifiés avec de l'anhydride maléique, ou des téryonomères, ou d'un copolymère méthacrylique EVA - acide éthylénique;
• couche C, épaisseur 18%, première couche barrière (surtout contre la vapeur d'eau) - constituée d'un polymère polyamide choisi entre PA 6 ou PA 6/66 ou leur mélange ;
• couche D, épaisseur 8%, deuxième couche barrière (surtout contre l'oxygène) - constituée d'un polymère polyamide de type PA 6/66 seul ou mélangé à PA 6 ou à PA aliphatique contenant des groupes métaxylène, ou à un PA amorphe;
• couche E, épaisseur 18%, deuxième couche adhésive - constituée d'un polymère adhésif choisi dans la famille EVA, ou de polymères éthyléniques modifiés avec de l'anhydride maléique ou des téryonomères, ou d'un copolymère méthacrylique EVA - acide éthylénique ;
• couche F, épaisseur 25%, couche externe et quatrième couche barrière (surtout contre la vapeur d'eau) - constituée d'un polymère polyamide choisi entre PA 6 ou PA 6/66 ou leur mélange.

13. Film selon les revendications allant de 1 à 5, **caractérisé par le fait qu'**il comprend cinq couches A - B - C - D - E, en partant de la couche en contact avec le produit, constituées comme suit :
• couche A, épaisseur comprise entre 13 et 33%, couche soudante - la face interne de l'emballage, peut être constituée de ionomères de zinc ou de sodium, ou de polyéthylène à basse densité ou de polyéthylène à basse densité linéaire (LDPE/LLDPE) ou d'un plastomère d'éthylène ou d'obtène;
• couche B, épaisseur comprise entre 3 et 13%, première couche adhésive - constituée d'un polymère choisi dans la famille EVA ou de copolymères d'éthylène modifiés avec de l'anhydride maléique, ou des téryonomères, ou d'un copolymère méthacrylique EVA - acide éthylénique;
• couche C, épaisseur comprise entre 21 et 31%, deuxième couche barrière (surtout contre l'oxygène) - constituée d'un polymère polyamide de type PA 6/66 seul ou mélangé à PA 6 ou à PA aliphatique contenant des groupes métaxylène, ou à PA amorphe;
• couche D, épaisseur comprise entre 13 et 23%, deuxième couche adhésive - constituée d'un polymère adhésif choisi dans la famille EVA, ou de copolymères éthyléniques modifiés avec de l'anhydride maléique ou des téryonomères, ou d'un copolymère méthacrylique EVA - acide éthylénique;
• couche E, épaisseur comprise entre 15 et 35%, couche externe et deuxième couche barrière (surtout contre la vapeur d'eau) - constituée d'un polymère polyamide choisi entre PA 6 et PA 6/66 ou leur mélange.

14. Film selon la revendication 13, **caractérisé par le fait qu'**il comprend cinq couches A - B - C - D - E, en partant de la couche en contact avec le produit, constituées comme suit :
• couche A, épaisseur 23%, couche soudante - la face interne de l'emballage, peut être constituée de ionomères de zinc ou de sodium, ou de polyéthylène à basse densité ou de polyéthylène à basse densité linéaire (LDPE/LLDPE), ou d'un plastomère d'éthylène ou d'obtène;
• couche B, épaisseur 8%, première couche adhésive - constituée d'un polymère adhésif choisi dans la famille EVA ou de copolymères d'éthylène modifiés avec de l'anhydride maléique, ou des téryonomères, ou d'un copolymère méthacrylique EVA - acide éthylénique;
• couche C, épaisseur 26%, deuxième couche barrière (surtout contre l'oxygène) - constituée d'un polymère polyamide de type PA 6/66 seul ou mélangé à PA 6 ou à PA aliphatique contenant des groupes métaxylène, ou à PA amorphe;
• couche D, épaisseur 18%, deuxième couche adhésive - constituée d'un polymère adhésif choisi dans la famille EVA, ou de copolymères éthyléniques modifiés avec de l'anhydride maléique ou des téryonomères, ou d'un copolymère méthacrylique EVA - acide éthylénique;
• couche E, épaisseur 25%, couche externe et deuxième couche barrière (surtout contre la vapeur d'eau) - constituée d'un polymère polyamide choisi entre PA 6 et PA 6/66 ou leur mélange.

15. Film selon la revendication 9, **caractérisé par le fait qu'**il comprend sept couches A - B - C - D - E - F - G, en partant de la couche en contact avec le produit, constituées comme suit :
• couche A, épaisseur 20%, couche soudante - la face interne de l'emballage - constituée d'un polymère type ionomère à bas point de fusion;
• couche B, épaisseur 10%, première couche adhésive - constituée d'un polymère adhésif type téryonomère;
• couche C, épaisseur 15%, première couche barrière (surtout contre la vapeur d'eau) - constituée d'un polymère polyamide PA 6/66 ;
• couche D, épaisseur 15%, deuxième couche barrière (surtout pour l'oxygène) - constituée d'un mélange de polymère polyamide PA 6/66 - PA amorphe;
• couche E, épaisseur 15%, troisième couche barrière - constituée d'un polymère polyamide PA 6/66,
• couche F, épaisseur 10%, deuxième couche adhésive - constituée d'un polymère adhésif type téryonomère;
• couche G, épaisseur 15%, couche externe et quatrième couche barrière (surtout contre la vapeur d'eau) - constituée d'un polymère polyamide PA 6/66.

16. Film selon la revendication 9, **caractérisé par le fait qu'**il comprend sept couches A - B - C - D - E - F - G, en partant de la couche en contact avec le produit, constituées comme suit :
• couche A, épaisseur 20%, couche soudante - la face interne de l'emballage - constituée d'un polymère type ionomère à bas point de fusion ;
• couche B, épaisseur 10%, première couche adhésive - constituée d'un polymère adhésif type téryonomère;
• couche C, épaisseur 15%, première couche barrière (surtout contre la vapeur d'eau) - constituée d'un polymère polyamide PA 6/66;
• couche D, épaisseur 15%, deuxième couche barrière (surtout contre l'oxygène) - constituée d'un mélange de polymères polyamides PA 6/66 - PA amorphe;
• couche E, épaisseur 15%, troisième couche barrière - constituée d'un polymère polyamide PA 6/66;
• couche F, épaisseur 10%, deuxième couche adhésive - constituée d'un polymère adhésif type téryonomère;
• couche G, épaisseur 15%, couche externe et quatrième couche barrière (surtout contre la vapeur d'eau) - constituée d'un polymère polyamide PA 6/66.

17. Film selon la revendication 9, **caractérisé par le fait qu'**il comprend sept couches A - B - C - D - E - F - G, en partant de la couche en contact avec le produit, constituées comme suit :
• couche A, épaisseur 20%, couche soudante - la face interne de l'emballage - constituée d'un plastomère à bas point de fusion;
• couche B, épaisseur 10%, première couche adhésive - constituée d'un polymère adhésif type LLDPE, modifié avec de l'anhydride maléique;
• couche C, épaisseur 15%, première couche barrière (surtout contre la vapeur d'eau) - constituée d'un polymère polyamide PA 6/66;
• couche D, épaisseur 15%, deuxième couche barrière (surtout contre l'oxygène) - constituée d'un mélange de polymères polyamides PA 6/66 - PA amorphe;
• couche E, épaisseur 15%, troisième couche barrière - constituée d'un polymère polyamide PA 6/66,
• couche F, épaisseur 10%, deuxième couche adhésive - constituée d'un polymère adhésif type LLDPE modifié avec de l'anhydride maléique;
• couche G, épaisseur 15%, couche externe et quatrième couche barrière (surtout contre la vapeur d'eau) - constituée d'un polymère polyamide PA 6.

18. Film selon la revendication 9, **caractérisé par le fait qu'**il comprend sept couches A - B - C - D - E - F - G, en partant de la couche en contact avec le produit, constituées comme suit :
• couche A, épaisseur 20%, couche soudante - la face interne de l'emballage - constituée de LLDPE,
• couche B, épaisseur 10%, première couche adhésive - constituée d'un polymère adhésif type méthacrylique - EVA acide éthylénique;
• couche C, épaisseur 15%, première couche barrière (surtout contre la vapeur d'eau) - constituée d'un polymère polyamide PA 6/66,
• couche D, épaisseur 15%, deuxième couche barrière (surtout contre l'oxygène) - constituée d'un mélange de polymères polyamides PA 6/66 - PA amorphe
• couche E, épaisseur 15%, troisième couche barrière - constituée d'un polymère polyamide PA 6/66,
• couche F, épaisseur 10%, deuxième couche adhésive - constituée d'un copolymère type méthacrylique - EVA acide éthylénique;
• couche G, épaisseur 15%, couche externe et quatrième couche barrière (surtout contre la vapeur d'eau) - constituée d'un polymère polyamide PA 6/66.

19. Film selon la revendication 9, **caractérisé par le fait qu'**il comprend sept couches A - B - C - D - E - F - G, en partant de la couche en contact avec le produit, constituées comme suit :
• couche A, épaisseur 20%, couche soudante - la face interne de l'emballage - constituée d'un LLDPE;
• couche B, épaisseur 15%, première couche adhésive - constituée d'un polymère adhésif type LLDPE, modifié avec de l'anhydride maléique;
• couche C, épaisseur 15%, première couche barrière (surtout contre la vapeur d'eau) - constituée d'un polymère polyamide PA 6/66,
• couche D, épaisseur 15%, deuxième couche barrière (surtout contre l'oxygène) - constituée d'un mélange de polymères polyamides PA 6/66 - PA amorphe;
• couche E, épaisseur 15%, troisième couche barrière - constituée d'un polymère polyamide PA 6/66,
• couche F, épaisseur 10%, deuxième couche adhésive - constituée d'un polymère adhésif type LLDPE modifié avec de l'anhydride maléique;
• couche G, épaisseur 20%, couche externe et quatrième couche barrière (surtout contre la vapeur d'eau) - constituée d'un polymère polyamide PA 6/66.

20. Film selon la revendication 11, **caractérisé par le fait qu'**il comprend sept couches A - B - C - D - E - F, en partant de la couche en contact avec le produit, constituées comme suit :
• couche A, épaisseur 23%, couche soudante - la face interne de l'emballage - constituée d'un polymère type ionomère à bas point de fusion ;
• couche B, épaisseur 8%, première couche adhésive - constituée d'un polymère adhésif type téryonomère ;
• couche C, épaisseur 18%, première couche barrière (surtout contre la vapeur d'eau) - constituée d'un mélange de polymères polyamides PA 6/66 - PA6 ;
• couche D, épaisseur 8%, deuxième couche barrière (surtout contre l'oxygène) - constituée d'un polymère polyamide type PA 6/66 ;
• couche E, épaisseur 20%, deuxième couche adhésive - constituée d'un polymère adhésif type téryonomère;
• couche F, épaisseur 20%, couche externe et troisième couche barrière (surtout contre la vapeur d'eau) - constituée d'un mélange de polymères polyamides PA 6/66 - PA6.

21. Film selon la revendication 13, **caractérisé par le fait qu'**il comprend cinq couches A - B - C - D - E, en partant de la couche en contact avec le produit, constituées comme suit:
• couche A, épaisseur 23%, couche soudante - la face interne de l'emballage - constituée d'un polymère type ionomère à bas point de fusion ;
• couche B, épaisseur 8%, première couche adhésive - constituée d'un polymère adhésif type téryonomère ;
• couche C, épaisseur 26%, première couche barrière (surtout contre la vapeur d'eau) - constituée d'un polymère polyamide PA 6/66,
• couche D, épaisseur 18%, deuxième couche adhésive - constituée d'un polymère adhésif type téryonomère;
• couche E, épaisseur 25%, deuxième couche barrière - constituée d'un polymère polyamide PA 6/66.

22. Un procédé à double ou tripe bulle pour la production du film selon les revendications allant de 1 à 21.

## Patentansprüche

1. Heißschrumpfende transparente Folie für die Verpackung von Lebensmitteln, umfassend eine Anzahl von überlappenden Schichten, die aus nicht vemetzten thermoplastischen Polymeren verschiedenen Typs bestehen, wobei das Material, das eine der beiden äußeren Schichten bildet, bei einer Temperatur schmilzt, die niedriger ist als die der Materialien, die die anderen Schichten bilden, und besagte Folie durch ein doppeltes oder dreifaches Bubble-Verfahren erhältlich ist, charakterisiert durch die Tatsache, dass:
• mindestens zwei Schichten aus Polymeren bestehen, die ein Young-Modul besitzen, dass wesentlich höher ist als das für die anderen Polymere, die die anderen Schichten bilden.
• eine der besagten mindestens zwei Schichten mit einem höheren Young-Modul einen Abstand aufweist zu den anderen Schichten mit einem höheren Young-Modul von mindestens einer Schicht mit einem niedrigeren Young-Modul.
• eine der besagten mindestens zwei Schichten mit einem höheren Young-Modul auf der Außenseite der Folie ist, das heißt auf einer der beiden Seiten der Folie, während die andere der mindestens einen Schicht mit einem höheren Young-Modul die Innenseite der Folie ist.

2. Folie gemäß Anspruch 1, charakterisiert durch die Tatsache, dass besagte zwei Schichten mit einem höheren Young-Modul höchst undurchlässig sind gegen Gas, vor allem Sauerstoff und Wasserdampf.

3. Folie gemäß Anspruch 1, charakterisiert durch die Tatsache, dass die besagten Polymere mit höheren Young-Modulen nur als Gassperre

4. Folie gemäß Anspruch 1, charakterisiert durch die Tatsache, dass besagte mindestens eine Schicht mit einem höheren Young-Modul an der Innenseite der Folie auf der entgegengesetzten Seite liegt in Bezug auf die neutrale Fläche der Folie der Schicht mit einem höheren Young-Modul, das heißt auf der Außenseite der Folie.

5. Folie gemäß Anspruch 3, mit einer Dicke zwischen 20 und 60 µm, charakterisiert durch die Tatsache, dass die Dicke aller die Folie bildenden Schichten, ihre Schichten und Dicke, auf Grund derer sich der Abstand jeder Schicht von der neutralen Fläche dieses Films herleitet, so festgelegt sind, dass die Summe der Momente, die von diesen Schichten in Bezug auf die neutrale Fläche nach dem Prozess der Zweifachausrichtung ausgeübt werden, im Wesentlichen gleich null ist, wobei:
• das Moment, das von einer einzigen Schicht in Bezug auf die neutrale Fläche ausgeübt wird, gleich dem Produkt der Membrankraft ist, die von dieser Schicht ausgeübt wird, multipliziert mit dem Abstand der Medianfläche besagter Schicht von der neutralen Fläche der Folie.
• die Membrankraft, die von besagter Schicht ausgeübt wird, gleich dem Produkt des Young-Moduls für das Material ist, das die Schicht bildet, multipliziert mit der Dicke besagter Schicht und mit der verhinderten Schrumpfung, ausgedrückt im Prozentsatz.

6. Folie gemäß Ansprüchen 1 bis 3, charakterisiert durch die Tatsache, dass die Schichten mit einem höheren Young-Modul aus Polymeren bestehen, die zur Polyamid-Familie gehören.

7. Folie gemäß Ansprüchen 1 bis 4, charakterisiert durch die Tatsache, dass die Schichten mit einem höheren Young-Modul aus Polymeren bestehen, die zur Polyamid-Familie gehören und dass besagte Polymere nur als Gassperre agieren.

8. Folie gemäß Ansprüchen 1 bis 4, charakterisiert durch die Tatsache, dass die Schichten mit einem höheren Young-Modul aus Polymeren bestehen, die zur Polyamid-Familie gehören, dass besagte Polymere nur als Gassperre agieren und dass besagte Polyamide eine Dehnkraft von mehr als 25 MPa und elastische Module von mehr als 300 MPa haben.

9. Folie gemäß Ansprüchen 1 bis 8, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 10 bis 30%, Schweißschicht - die Innenseite der Verpackung, kann aus Zink- oder Natrium-lonomeren oder Polyäthylen weich oder linearem Polyäthylen weich (LDPE/LLDPE) oder einem Äthylen- oder Octen-Plastomer bestehen;
• Schicht B, Dicke von 5 bis 15%, erste Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht C, Dicke von 10 bis 20%, erste Sperrschicht (hauptsächlich für Wasserdampf), bestehend aus einem Polyamid-Polymer, gewählt aus PA 6 order PA 6/66 oder ihrem Gemisch.
• Schicht D, Dicke von 10 bis 20%, zweite Sperrschicht (hauptsächlich für Sauerstoff), bestehend aus einem Polyamid-Polymer Typ PA 6/66 allein oder gemischt mit PA 6 oder mit aliphatischem PA mit Meta-Xylylen-Gruppen oder mit einem amorphen PA;
• Schicht E, Dicke von 10 bis 20%, dritte Sperrschicht (hauptsächlich für Wasserdampf), bestehend aus einem Polyamid-Polymer, gewählt aus PA 6 order PA 6/66 oder ihrem Gemisch und sie kann gleich sein wie Schicht C oder verschieden;
• Schicht F, Dicke von 5 bis 15%, zweite Klebeschicht, bestehend aus einem klebenden Polymer, gewählt aus der EVA-Familie oder Äthylen-Polymeren, modifiziert mit Maleinsäureanhydrid oder Terionomeren, oder einem EVA - Äthylensäure-Metacryl-Copolymer;
• Schicht G, Dicke von 5 bis 25%, Außenschicht und vierte Sperrschicht (hauptsächlich für Wasserdampf), bestehend aus einem Polyamid-Polymer, gewählt aus PA 6 order PA 6/66 oder ihrem Gemisch.

10. Folie gemäß Anspruch 9, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 20%, Schweißschicht - die Innenseite der Verpackung, kann aus Zink- oder Natrium-lonomeren oder Polyäthylen weich oder linearem Polyäthylen weich (LDPE/LLDPE) oder einem Äthylen- oder Octen-Plastomer bestehen;
• Schicht B, Dicke 10%, erste Klebeschicht, bestehend aus einem klebenden Polymer, gewählt aus der EVA-Familie oder Äthylen-Polymeren, modifiziert mit Maleinsäureanhydrid oder Terionomeren, oder einem EVA - Äthylensäure-Metacryl-Copolymer;
• Schicht C, Dicke 15%, erste Sperrschicht (hauptsächlich für Wasserdampf), bestehend aus einem Polyamid-Polymer, gewählt aus PA 6 order PA 6/66 oder ihrem Gemisch.
• Schicht D, Dicke 15%, zweite Sperrschicht (hauptsächlich für Sauerstoff), bestehend aus einem Polyamid-Polymer Typ PA 6/66 allein oder gemischt mit PA 6 oder mit aliphatischem PA mit Meta-Xylylen-Gruppen oder mit einem amorphen PA;
• Schicht E, Dicke 15%, dritte Sperrschicht (hauptsächlich für Wasserdampf), bestehend aus einem Polyamid-Polymer, gewählt aus PA 6 order PA 6/66 oder ihrem Gemisch und sie kann gleich sein wie Schicht C oder verschieden;
• Schicht F, Dicke 10%, zweite Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht G, Dicke 15%, Außenschicht und vierte Sperrschicht (hauptsächlich für Wasserdampf), bestehend aus einem Polyamid-Polymer, gewählt aus PA 6 order PA 6/66 oder ihrem Gemisch.

11. Folie gemäß Ansprüchen 1 bis 5, charakterisiert durch die Tatsache, dass sie sechs Schichten A - B - C - D - E - F umfasst, beginnend bei der Schicht, die mit dem Produkt in Kontakt ist, bestehend wie folgt:
• Schicht A, Dicke von 13 bis 33%, Schweißschicht - die Innenseite der Verpackung, sie kann aus Zink- oder Natrium-lonomeren oder Polyäthylen weich oder linearem Polyäthylen weich (LDPE/LLDPE) oder einem Äthylen- oder Octen-Plastomer bestehen;
• Schicht B, Dicke von 3 bis 13%, erste Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht C, Dicke von 13 bis 23%, erste Sperrschicht (hauptsächlich für Wasserdampf), bestehend aus einem Polyamid-Polymer, gewählt aus PA 6 order PA 6/66 oder ihrem Gemisch.
• Schicht D, Dicke von 3 bis 13%, zweite Sperrschicht (hauptsächlich für Sauerstoff), bestehend aus einem Polyamid-Polymer Typ PA 6/66 allein oder gemischt mit PA 6 oder mit aliphatischem PA mit Meta-Xylylen-Gruppen oder mit einem amorphen PA;
• Schicht E, Dicke von 13 bis 23%, zweite Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht F, Dicke von 15 bis 35%, Außenschicht und dritte Sperrschicht (hauptsächlich für Wasserdampf), bestehend aus einem Polyamid-Polymer, gewählt aus PA 6 order PA 6/66 oder ihrem Gemisch.

12. Folie gemäß Anspruch 11, charakterisiert durch die Tatsache, dass sie sechs Schichten A - B - C - D - E - F umfasst, beginnend bei der Schicht, die mit dem Produkt in Kontakt ist, bestehend wie folgt:
• Schicht A, Dicke 23%, Schweißschicht - die Innenseite der Verpackung, sie kann aus Zink- oder Natrium-Ionomeren oder Polyäthylen weich oder linearem Polyäthylen weich (LDPE/LLDPE), einem Äthylen- oder Octen-Plastomer bestehen;
• Schicht B, Dicke 8%, erste Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht C, Dicke 18%, erste Sperrschicht (hauptsächlich für Wasserdampf), bestehend aus einem Polyamid-Polymer, gewählt aus PA 6 order PA 6/66 oder ihrem Gemisch.
• Schicht D, Dicke 8%, zweite Sperrschicht (hauptsächlich für Sauerstoff), bestehend aus einem Polyamid-Polymer Typ PA 6/66 allein oder gemischt mit PA 6 oder mit aliphatischem PA mit Meta-Xylylen-Gruppen oder mit einem amorphen PA;
• Schicht E, Dicke 18%, zweite Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht F, Dicke 25%, Außenschicht und dritte Sperrschicht (hauptsächlich für Wasserdampf), bestehend aus einem Polyamid-Polymer, gewählt aus PA 6 order PA 6/66 oder ihrem Gemisch.

13. Folie gemäß Ansprüchen 1 bis 5, charakterisiert durch die Tatsache, dass sie fünf Schichten A - B - C - D - E umfasst, beginnend bei der Schicht, die mit dem Produkt in Kontakt ist, bestehend wie folgt:
• Schicht A, Dicke von 13 bis 33%, Schweißschicht - die Innenseite der Verpackung, sie kann aus Zink- oder Natrium-lonomeren oder Polyäthylen weich oder linearem Polyäthylen weich (LDPE/LLDPE) oder einem Äthylen- oder Octen-Plastomer bestehen;
• Schicht B, Dicke von 3 bis 13%, erste Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht C, Dicke von 21 bis 31%, erste Sperrschicht (hauptsächlich für Sauerstoff), bestehend aus einem Polyamid-Polymer Typ PA 6/66 allein oder gemischt mit PA 6 oder mit aliphatischem PA mit Meta-Xylylen-Gruppen oder mit einem amorphen PA;
• Schicht D, Dicke von 13 bis 23%, zweite Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht E, Dicke von 15 bis 35%, Außenschicht und zweite Sperrschicht (hauptsächlich für Wasserdampf), bestehend aus einem Polyamid-Polymer, gewählt aus PA 6 order PA 6/66 oder ihrem Gemisch.

14. Folie gemäß Anspruch 13, charakterisiert durch die Tatsache, dass sie fünf Schichten A - B - C - D - E umfasst, beginnend bei der Schicht, die mit dem Produkt in Kontakt ist, bestehend wie folgt:
• Schicht A, Dicke 23%, Schweißschicht - die Innenseite der Verpackung, sie kann aus Zink- oder Natrium-Ionomeren oder Polyäthylen weich oder linearem Polyäthylen weich (LDPE/LLDPE) oder einem Äthylen- oder Octen-Plastomer bestehen;
• Schicht B, Dicke 8%, erste Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht C, Dicke 26%, erste Sperrschicht (hauptsächlich für Sauerstoff), bestehend aus einem Polyamid-Polymer Typ PA 6/66 allein oder gemischt mit PA 6 oder mit aliphatischem PA mit Meta-Xylylen-Gruppen oder mit einem amorphen PA;
• Schicht D, Dicke 18%, zweite Klebeschicht, bestehend aus einem klebenden Polymer, gewählt aus der EVA-Familie oder Äthylen-Copolymeren, modifiziert mit Maleinsäureanhydrid oder Terionomeren, oder einem EVA - Äthylensäure-Metacryl-Copolymer;
• Schicht E, Dicke 25%, Außenschicht und zweite Sperrschicht (hauptsächlich für Wasserdampf), bestehend aus einem Polyamid-Polymer, gewählt aus PA 6 oder PA 6/66 oder ihrem Gemisch.

15. Folie gemäß Anspruch 9, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 20%, Schweißschicht - die Innenseite der Verpackung, bestehend aus einem niedrigschmelzenden Polymer des lonomer-Typs;
• Schicht B, Dicke 10%, erste Klebeschicht, bestehend aus einem klebenden Polymer des Terionomer-Typs;
• Schicht C, Dicke 15%, erste Sperrschicht (hauptsächlich für Wasserdampf), bestehend aus einem PA 6/66 Polyamid-Polymer.
• Schicht D, Dicke 15%, zweite Sperrschicht (hauptsächlich für Sauerstoff), bestehend aus einem Gemisch von PA 6/66 - amorphen PA Polyamid-Polymeren;
• Schicht E, Dicke 15%, dritte Sperrschicht, bestehend aus einem PA 6/66 Polyamid-Polymer;
• Schicht F, Dicke 10%, zweite Klebeschicht, bestehend aus einem klebenden Polymer des Terionomer-Typs;
• Schicht G, Dicke 15%, Außenschicht und vierte Sperrschicht (hauptsächlich für Wasserdampf), bestehend aus einem PA 6/66 Polyamid-Polymer.

16. Folie gemäß Anspruch 9, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 20%, Schweißschicht - die Innenseite der Verpackung, bestehend aus einem niedrigschmelzenden Polymer des lonomer-Typs;
• Schicht B, Dicke 10%, erste Klebeschicht, bestehend aus einem klebenden Polymer des Terionomer-Typs;
• Schicht C, Dicke 15%, erste Sperrschicht (hauptsächlich für Wasserdampf), bestehend aus einem PA 6/66 Polyamid-Polymer.
• Schicht D, Dicke 15%, zweite Sperrschicht (hauptsächlich für Sauerstoff), bestehend aus einem Gemisch von PA 6/66 - amorphen PA Polyamid-Polymeren;
• Schicht E, Dicke 15%, dritte Sperrschicht, bestehend aus einem PA 6/66 Polyamid-Polymer;
• Schicht F, Dicke 10%, zweite Klebeschicht, bestehend aus einem klebenden Polymer des Terionomer-Typs;
• Schicht G, Dicke 15%, Außenschicht und vierte Sperrschicht (hauptsächlich für Wasserdampf), bestehend aus einem PA 6/66 Polyamid-Polymer.

17. Folie gemäß Anspruch 9, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 20%, Schweißschicht - die Innenseite der Verpackung, bestehend aus einem niedrigschmelzenden Plastomer;
• Schicht B, Dicke 10%, erste Klebeschicht, bestehend aus einem klebenden Polymer des LLDPE-Typs, modifiziert mit Maleinsäureanhydrid;
• Schicht C, Dicke 15%, erste Sperrschicht (hauptsächlich für Wasserdampf), bestehend aus einem PA 6/66 Polyamid-Polymer;
• Schicht D, Dicke 15%, zweite Sperrschicht (hauptsächlich für Sauerstoff), bestehend aus einem Gemisch von PA 6/66 - amorphen PA Polyamid-Polymeren;
• Schicht E, Dicke 15%, dritte Sperrschicht, bestehend aus einem PA 6/66 Polyamid-Polymer;
• Schicht F, Dicke 10%, zweite Klebeschicht, bestehend aus einem klebenden Polymer des LLDPE-Typs, modifiziert mit Maleinsäureanhydrid;
• Schicht G, Dicke 15%, Außenschicht und vierte Sperrschicht (hauptsächlich für Wasserdampf), bestehend aus einem PA 6 Polyamid-Polymer.

18. Folie gemäß Anspruch 9, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 20%, Schweißschicht - die Innenseite der Verpackung, bestehend aus LDPE;
• Schicht B, Dicke 10%, erste Klebeschicht, bestehend aus einem EVA klebenden Polymer des Äthylensäure-Metacryl-Typs;
• Schicht C, Dicke 15%, erste Sperrschicht (hauptsächlich für Wasserdampf), bestehend aus einem PA 6/66 Polyamid-Polymer;
• Schicht D, Dicke 15%, zweite Sperrschicht (hauptsächlich für Sauerstoff), bestehend aus einem Gemisch von PA 6/66 - amorphen PA Polyamid-Polymeren;
• Schicht E, Dicke 15%, dritte Sperrschicht, bestehend aus einem PA 6/66 Polyamid-Polymer;
• Schicht F, Dicke 10%, zweite Klebeschicht, bestehend aus einem EVA - Copolymer des Äthylensäure-Metacryl-Typs;
• Schicht G, Dicke 15%, Außenschicht und vierte Sperrschicht (hauptsächlich für Wasserdampf), bestehend aus einem PA 6 Polyamid-Polymer.

19. Folie gemäß Anspruch 9, charakterisiert durch die Tatsache, dass sie sieben Schichten A - B - C - D - E - F - G umfasst, beginnend bei der Schicht, die mit dem Produkt in Kontakt ist, bestehend wie folgt:
• Schicht A, Dicke 20%, Schweißschicht - die Innenseite der Verpackung, bestehend aus LLDPE;
• Schicht B, Dicke 15%, erste Klebeschicht, bestehend aus einem klebenden Polymer des LLDPE-Typs, modifiziert mit Maleinsäureanhydrid;
• Schicht C, Dicke 15%, erste Sperrschicht (hauptsächlich für Wasserdampf), bestehend aus einem PA 6/66 Polyamid-Polymer;
• Schicht D, Dicke 15%, zweite Sperrschicht (hauptsächlich für Sauerstoff), bestehend aus einem Gemisch von PA 6/66 - amorphen PA Polyamid-Polymeren;
• Schicht E, Dicke 15%, dritte Sperrschicht, bestehend aus einem PA 6/66 Polyamid-Polymer;
• Schicht F, Dicke 10%, zweite Klebeschicht, bestehend aus einem klebenden Polymer des LLDPE-Typs, modifiziert mit Maleinsäureanhydrid;
• Schicht G, Dicke 20%, Außenschicht und vierte Sperrschicht (hauptsächlich für Wasserdampf), bestehend aus einem PA 6/66 Polyamid-Polymer.

20. Folie gemäß Anspruch 11, charakterisiert durch die Tatsache, dass sie sechs Schichten A - B - C - D - E - F umfasst, beginnend bei der Schicht, die mit dem Produkt in Kontakt ist, bestehend wie folgt:
• Schicht A, Dicke 23%, Schweißschicht - die Innenseite der Verpackung, bestehend aus einem niedrigschmelzenden Polymer des lonomer-Typs;
• Schicht B, Dicke 8%, erste Klebeschicht, bestehend aus einem klebenden Polymer des Terionomer-Typs;
• Schicht C, Dicke 18%, erste Sperrschicht (hauptsächlich für Wasserdampf), bestehend aus einem Gemisch von PA 6/66 - PA 6 Polyamid-Polymeren;
• Schicht D, Dicke 8%, zweite Sperrschicht (hauptsächlich für Sauerstoff), bestehend aus einem Polyamid-Polymer des PA 6/66-Typs;
• Schicht E, Dicke 20%, zweite Klebeschicht, bestehend aus einem klebenden Polymer des Terionomer-Typs;
• Schicht F, Dicke 20%, Außenschicht und dritte Sperrschicht (hauptsächlich für Wasserdampf), bestehend aus einem Gemisch von PA 6/66 - PA 6 Polyamid-Polymeren.

21. Folie gemäß Anspruch 13, charakterisiert durch die Tatsache, dass sie fünf Schichten A - B - C - D - E umfasst, beginnend bei der Schicht, die mit dem Produkt in Kontakt ist, bestehend wie folgt:
• Schicht A, Dicke 23%, Schweißschicht - die Innenseite der Verpackung, bestehend aus einem niedrigschmelzenden Polymer des lonomer-Typs;
• Schicht B, Dicke 8%, erste Klebeschicht, bestehend aus einem klebenden Polymer des Terionomer-Typs;
• Schicht C, Dicke 26%, erste Sperrschicht (hauptsächlich für Wasserdampf), bestehend aus einem PA 6/66 Polyamid-Polymer;
• Schicht D, Dicke 18%, zweite Klebeschicht, bestehend aus einem klebenden Polymer des Terionomer-Typs;
• Schicht E, Dicke 25%, zweite Sperrschicht, bestehend aus einem PA 6/66 Polyamid-Polymer.

22. Ein doppeltes oder dreifaches Bubble-Verfahren zur Produktion der Folie gemäß der Ansprüchen 1 bis 21.
